# EUROPÄISCHE PATENTSCHRIFT

(11) **EP 1 877 659 B1**
(45) Veröffentlichungstag und Bekanntmachung des Hinweises auf die Patenterteilung: **03.06.2009**
(21) Anmeldenummer: 05821980.9
(22) Anmeldetag: 09.12.2005
(51) Int. Cl.: F02F 3/10, F16J 1/02

(54) **KOLBEN F]R EINEN VERBRENNUNGSMOTOR UND VERFAHREN ZUR BESCHICHTUNG SEINER NABENBOHRUNGEN**
PISTON FOR A COMBUSTION ENGINE AND METHOD FOR COATING THE HUB BORES THEREOF
PISTON POUR MOTEUR A COMBUSTION INTERNE ET PROCEDE POUR RECOUVRIR SES ORIFICES DE MOYEU

(30) Priorität: 10.12.2004 DE 102004059492; 17.11.2005 DE 102005055365
(43) Veröffentlichungstag der Anmeldung: 16.01.2008
(73) Patentinhaber: Mahle International GmbH, 70376 Stuttgart (DE)
(72) Erfinder: MAIER, Kurt, 71229 Leonberg (DE); ROSE, Reinhard, 70736 Fellbach/Schmiden (DE); NAGEL, Gunar, 71332 Waiblingen (DE)
(74) Vertreter: Pohle, Reinhard
(86) Internationale Anmeldenummer: PCT/DE2005/002229
(87) Internationale Veröffentlichungsnummer: WO 2006/061013

(56) Entgegenhaltungen:
- EP-A- 0 400 334
- EP-A- 0 713 962
- EP-A- 1 433 838
- US-A- 5 239 955

## Beschreibung

Die Erfindung betrifft einen Kolben für einen Verbrennungsmotor, mit Gleitlagerflächen aufweisende Nabenbohrungen zur Aufnahme eines Kolbenbolzens.

Kolben mit Direktbeschichtung der Gleitlagerflächen seiner Nabenbohrungen sind im Stand der Technik, beispielsweise aus der DE 41 11 368 C2, DE 33 01 336 A1, EP 0 400 334 B1 sowie EP 1 433 838 A bekannt. Es wird offenbart, dass für die Gleitlagerflächen der Nabenbohrungen in buchsenfreier Ausführung eine Lagerschicht aus Metall, insbesondere aus Nickel, galvanisch wenigstens teilweise auf die Gleitflächen direkt aufgebracht wird, die für eine ausreichende Schmierung der Lagerstellen sorgen soll. Bekannt ist außerdem bei einem Kolbenoberteil aus Stahl oder Eisen, dass die Gleitlagerflächen bei einer Oberflächenrauhigkeit von Ra (Mittenrauwert) 0,5 bis 2,0 µm phosphatiert sind, wobei die Nabenbohrungen als Formbohrungen ausgeführt sind. In beiden Ausführungsformen ist der Kolbenbolzen nicht beschichtet.

Zur Einhaltung der Maßgenauigkeit für die Montage des Bolzens im Kolben ist jedoch nach wie vor meist eine mechanische Nachbearbeitung, beispielsweise durch Honen oder Feinspindeln, der Metallschicht notwendig, welche eine deutliche Reduzierung des Herstellungsaufwandes für derartige Kolbennabenbeschichtungen nicht zulässt. In der Praxis hat sich außerdem gezeigt, dass die Metallschichten für keine ausreichende Fress- und Schmiersicherheit infolge des Verschleißes in den Lagern sorgen können, so dass die Lebensdauer der Bolzen-Naben-Lager in derartiger Ausführungen begrenzt ist.

Die Nachbearbeitung der Beschichtung erfordert zudem einen großen Aufwand in der Maßhaltigkeit, um eine Montage auch bei engstem Spiel von Kolben und Kolbenbolzen, welches eine minimale Geräuschentwicklung gestattet, zu gewährleisten. Zur Verbesserung der Reib- bzw. Gleiteigenschaft eines Bauteils ist aus der DE 39 39 704 A1 ein Schichtwerkstoff bekannt, der nach dem Aufspritzen eine unregelmäßige, fleckenartige Verteilung unterschiedlicher Dicke auf der Bauteiloberfläche erzeugen soll. Die Bereiche mit erhöhter Dicke werden dabei bevorzugt durch Füllstoffteilchen gebildet, die in dem Schichtwerkstoff beigemischt sind. Nachteilig ist hierbei jedoch, dass eine unkontrollierte ungleichmäßige Schichtdickenreduzierung durch einen Einbrennvorgang zur Trocknung erzeugt wird, durch die eine genaue Lagerspieleinstellung zwischen Kolbenbolzen und Kolbennabe eines Verbrennungsmotors nicht gewährleistet ist.

Es ist deshalb Aufgabe der Erfindung, ein Kolben für einen Verbrennungsmotor und Verfahren zur Beschichtung seiner Gleitlagerflächen anzugeben, mit dem hochwirksam und kostengünstig ein langfristiger Fress- und Verschleißschutz auch bei engstem Montagespiel erzielt werden kann.

Erfindungsgemäß wird die Aufgabe durch die Merkmale der unabhängigen Ansprüche 1 und 5 gelöst.

Durch das direkte Auftragen einer als Gleitlack ausgeführten selbstschmierenden Beschichtung, die aus einem thermisch aushärtbaren Harz mit darin eingelagerten Festschmierstoffpartikeln besteht, auf die Gleitlagerflächen der Nabenbohrungen eines Kolbens werden im Wesentlichen folgende Vorteile erzielt:
- keine Lagerbuchsen erforderlich, um eine ausreichende Schmier- und Fresssicherheit zu erreichen;
- das Aufbringen einer Haftschicht auf die Gleitlagerflächen zur Verbesserung der Haftung des Gleitlackes ist nicht erforderlich;
- keine Nachbearbeitung der Oberfläche des aufgebrachten Gleitlackes zur Erzielung einer gewünschten Maßhaltigkeit, wie Schichtdicke der Beschichtung, Einstellung des Lagerspiels, usw., sowie der Oberflächengüte, wie Rauhigkeit, Welligkeit usw.;
- verbesserte Beständigkeit infolge verbesserter Schmiereigenschaften gegenüber den bekannten Metalllegierungsschichten und damit Erzielung einer größeren Lebensdauer des Kolben-Bolzen-Lagers.

In Abhängigkeit der Anforderungen können die eingelagerten Festschmierstoffpartikel jeweils aus einem oder einer Mischung von zwei der Materialien Graphit, Molybdändisulfid, Wolframdisulfid, hexagonales Bornitrid oder PTFE bestehen, wobei die ausgehärtete Beschichtung der Gleitlagerfläche 50 bis 60 Gewichts- % der Festschmierstoffpartikel enthält, um eine optimale Schmierung des Kolbenbolzen- Naben-Lagers zu gewährleisten. Die Festschmierstoffpartikel weisen dazu eine Partikelgröße von 1 bis 3 µm bei einer Schichtdicke des ausgehärteten Gleitlacks von 10-15 µm auf. Die Schichtdickentoleranz beträgt dabei max. plus/minus 1 µm, wodurch engste Montagespiele erreichbar sind.

Verfahrensmäßig wird der Gleitlack vorteilhaft durch ein Rotationszerstäubungsverfahren auf die Gleitlagerflächen der Nabenbohrungen aufgetragen, wodurch eine Beschichtung von Nabenbohrungen mit auch kleineren Durchmessern erreichbar ist.

Die derart erzeugten Schichten weisen eine gleichmäßige Schichtdicke und sehr gute Oberflächengüte auf. Ebenso ist die Tiefe des zu beschichtenden Bereiches gut abgrenzbar. Das Beschichtungsverfahren ist gegenüber den üblichen Beschichtungsarten sehr wirtschaftlich.

Vorteilhafte Weiterbildungen ergeben sich aus den Unteransprüchen.

Ausführungsbeispiele der Erfindung werden im Folgenden anhand der beigefügten Zeichnungen näher erläutert. Es zeigen:
- Fig. 1: einen Schnitt durch einen Kolben mit über den Kolbenbolzen angelenktem Kolbenschaft;
- Fig. 2: einen Nabenbohrungsbereich als Ausschnitt aus den Kolben gemäß Fig. 1;
- Fig. 3: einen Nabenbohrungsbereich mit einer Schmierbohrung als Ausschnitt ge- mäß Fig. 2

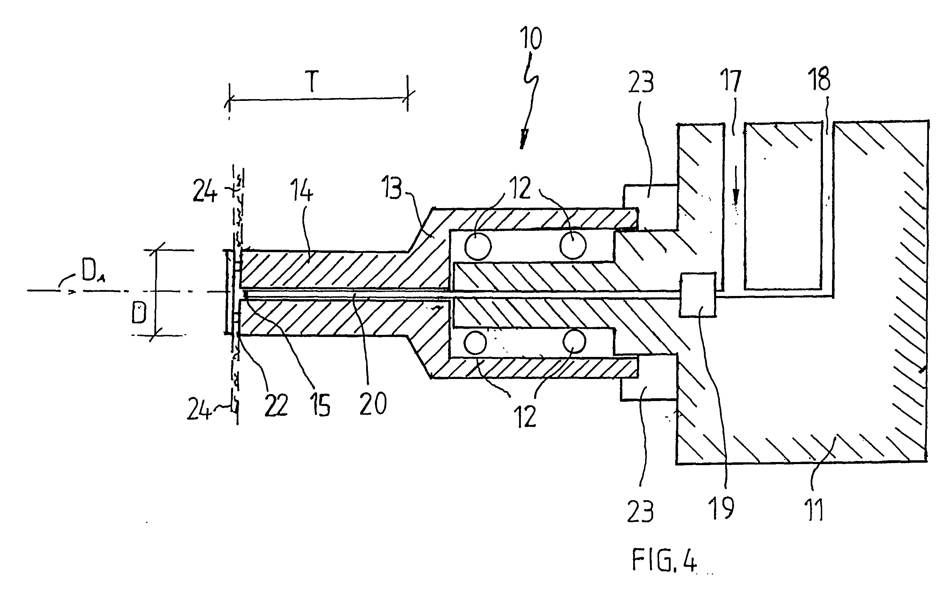

- Fig. 4: eine Vorrichtung zum Aufbringen einer Beschichtung auf die Gleitlagerflä- chen einer Nabenbohrung

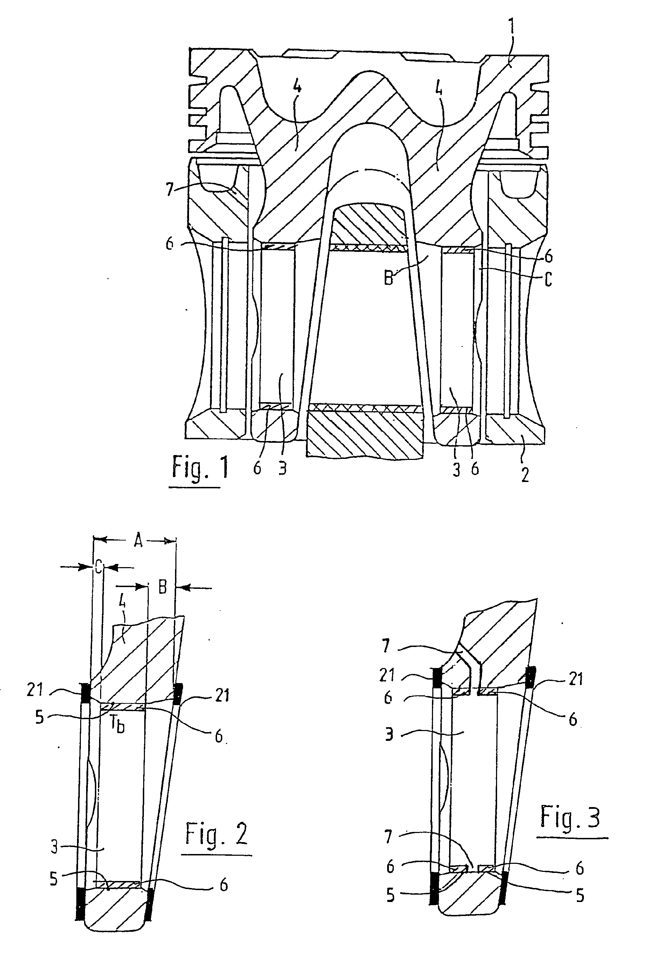

Der gemäß Figur 1 beispielhaft dargestellte Kolben 1 -der auch ein Ferrothermkolben® oder Monothermkolben® der Firma MAHLE, Stuttgart, aus Stahl oder ein Stahlkolbenoberteil oder im Allgemeinen ein Leichtmetallkolben sein kann- weist Naben 4 mit einer Gleitlagerfläche 5 versehene Nabenbohrungen 3 auf, die entsprechend ihren Anforderungen formgebohrt und /oder hochoval oder queroval ausgeführt sind. Die Oberflächenrauhigkeit Ra (Mittenrauwert) kann der in der DE 41 11 368 A1 angegebenen entsprechen, wobei im Allgemeinen für Nabenbohrungsdurchmesser kleiner 30 mm die Ra-Werte 0,63 µm betragen und für Nabenbohrungsdurchmesser zwischen 30-60 mm Ra-Werte von 0,8 µm erreicht werden. Die Nabenbohrungen 3 mit der Länge A können zylindrisch kreisrund oder zylindrisch mit geringer Ovalität sowie mit oder ohne aufgeweitete Bohrungsendbereiche B, C ausgebildet sein.

Die Gleitlagerflächen 5 zeigen eine selbstschmierende Beschichtung 6, die aus einem thermisch ausgehärteten Harz mit darin eingelagerten Festschmierstoffpartikel - als Gleitlack bezeichnet - gebildet sind. Das Harz ist ein Polyamidimid und die Festschmierstoffpartikel bestehen jeweils aus einem oder einer Mischung von zwei der Materialien Graphit, Molybdändisulfid, Wolframdisulfid, hexagonales Bornitrid oder PTFE.

Zum Aufbringen der erfindungsgemäßen Beschichtung auf die Gleitlagerflächen 5 der Naben 4 dient eine Vorrichtung 10 zum Rotationszerstäuben. Die Vorrichtung 10 weist ein Grundkörper 11 auf, der in einen rotierbaren Düsenkörper 13, welcher mit einem Lager 12, einer Düse 14 sowie einem Düsenaustritt 15 versehen ist, übergeht. Zur Rotation des Düsenkörpers 13 dient ein Antrieb 23. Der Grundkörper 11 besitzt jeweils Zuführkanäle 17 und 18, die für den Gleitlack sowie für Druckluft bestimmt sind und in einer Mischkammer 19 zur Dosierung und Vermischung enden. Ein mit der Mischkammer 19 verbundener Auswurfkanal 20 führt senkrecht auf eine Prallplatte 16, die für die Erzeugung eines ringförmigen Spaltes 22 mit einer Breite von 0,5 mm für den Auswurf des Gleitlack- Sprühstrahls 24 beabstandet vom Düsenkörper 13 angeordnet ist.

Der Düsenkörper 13 mit seiner Düse 14 rotiert mittels des Antriebs 23 im Drehzahlbereich von 14 000 bis 18 000 Umdrehungen pro Minute, so dass durch die an der Austrittsöffnung des ringförmigen Spaltes auftretenden Fliehkräfte das Gleitlack-Druckluft-Gemisch beschleunigt wird und als scheibenförmiger Spritzstrahl 24 radial austritt. Der Düsendurchmesser D wird dabei so gewählt, dass er etwa dem halben Durchmesser des Nabenbohrungsdurchmessers der zu beschichtenden Gleitlagerfläche entspricht. Die Vorrichtung kann bis zu der Düsentiefe T in das zu beschichtende Pleuelauge eingefahren werden. Da der Spritzstrahl in Achsrichtung schmal ist, kann die zu beschichtende Fläche in Achsrichtung durch einfaches Öffnen und Schließen der Lackzufuhr scharf begrenzt werden. Die Düsendurchmesser sind im Bereich zwischen 5 und 25 mm mit Düsentiefen bis zu 50 mm verfügbar, so dass mit der Vorrichtung Nabenbohrungen für Kolben aller Motortypen beschichtet werden können.

### Ausführungsbeispiel 1:

### Komplette Beschichtung der Gleitlagerfläche der Nabenbohrung:

Die Nabenbohrung 3 wird in bekannter Weise mechanisch fertigbearbeitet und weist entsprechend ihrem Durchmesser eine der vorgenannten Oberflächenrauhigkeiten auf. Der Nabenbohrungsdurchmesser vor dem Beschichten wird dabei derart gewählt, dass der Kolbenbolzen ein diametrales Spiel von 30-40 µm erhält. Der Kolben mit seinen Naben ist so gereinigt, dass Späne, Partikel, Bearbeitungsöle und dergleichen vollständig entfernt sind.

Zur Vorbereitung der Beschichtung werden beiderseits der Nabenbohrungen 3 Abdeckschablonen 21 angebracht, die der Außenkontur der Naben 4 angepasst sind. Die Schablonen 21 verhindern eine Beschichtung der Außenseiten der Naben.

Der aus dem sehr temperaturbeständigen Grundharz Polyamidimid aufgebaute Gleitlack enthält als Festschmierstoff eine Mischung aus Molybdändisulfid und Graphit mit einer Partikelgröße von 1-3 µm. Die Viskosität des Gleitlacks ist derart eingestellt, dass keine Tropfenbildung, aber eine ausreichende Applizierung ermöglicht ist. Mit einem Vorschub von 10-20 mm/sec wird die Düse zentrisch in die Nabenbohrung 3 eingeführt, so dass der Gleitlack auf den 50 bis 80 °C vorgewärmten Kolben appliziert wird. Der Gleitlack enthält im ausgehärteten Zustand 50-60 Gew.- % Festschmierstoffe. Ohne Lackzufuhr wird die Düse anschließend zurückgefahren. Der ganze Beschichtungsvorgang erfolgt in weniger als 5 Sekunden.

Danach wird die Schicht thermisch in einem Ofen ausgehärtet, wobei der Kolben zwischen10 bis 20 Minuten lang auf einer Temperatur von 200 °C gehalten werden muss. Die so erhaltene Schicht ist ca. 10 µm dick, wobei eine Schichtdickentoleranz von plus/minus 1 µm erreicht wird. Trotz Dickenreduzierung der Gleitschicht infolge Schrumpfung der Schicht wird ein enges diametrales Bolzenspiel erreicht, welches 10 - 20 µm. beträgt.

### Ausführungsbeispiel 2

### Partielle Beschichtung der Gleitlagerfläche der Nabenbohrung:

Der Kolben wird im wesentlichen gemäß Ausführungsbeispiel 1 bearbeitet und gereinigt.

Zur Vorbereitung der Beschichtung werden beiderseits der Nabenbohrungen 3 Abdeckschablonen 21 angebracht, die der Außenkontur der Naben 4 angepasst sind. Die Schablonen 21 verhindern eine Beschichtung der Außenseiten der Naben.

Der aus dem sehr temperaturbeständigen Grundharz Polyamidimid aufgebaute Gleitlack enthält als Festschmierstoff Graphit mit einer Partikelgröße von 1-3 µm. Die Viskosität des Gleitlacks ist derart eingestellt, dass keine Tropfenbildung, aber eine ausreichende Applizierung ermöglicht ist.

Der zylindrische Bereich der Nabenbohrung soll durch den Geleitlack beschichtet werden, wobei die Vorrichtung 11 verwendet wird.

Die Düse 14 wird an einer Nabenseite angesetzt- in Fig. 3 von links nach rechts bewegend- und ohne Gleitlackzufuhr bis zum Ende des Bereiches C der Nabenbohrung 3 eingefahren und anschließend der Gleitlack bis zum Erreichen des Anfanges des Nabenbereiches B aufgetragen. Danach wird die Lackzufuhr abgestellt, die Düse zurückgefahren und der in der Düse verbleibende Lackrest auf die Schablone abgesprüht. Die Applizierung des Gleitlackes erfolgt auf den 50 bis 80 °C vorgewärmten Kolben.

Danach wird die Schicht thermisch in einem Ofen ausgehärtet, wobei der Kolben 1 zwischen10 bis 20 Minuten lang auf einer Temperatur von 200 °C gehalten werden muss. Die so erhaltene Schicht ist ca. 10 µm dick, wobei eine Schichtdickentoleranz von plus/minus 1 µm erreicht wird. Trotz Dickenreduzierung der Gleitschicht infolge Schrumpfung der Schicht wird ein enges diametrales Bolzenspiel erreicht, welches 10 - 20 µm beträgt. Dieses enge Spiel ist besonders vorteilhaft, um Geräusche durch Bolzentickern zu vermeiden. Die Beschichtung gewährleistet, dass trotz des engen Spiels keine Fresser auftreten.

### Ausführungsbeispiel 3

### Beschichtung der Gleitlagerflächen der Nabenbohrungen mit ausgesparten Schmierrille:

Der Kolben wird im Wesentlichen gemäß Ausführungsbeispiel 1 bearbeitet und gereinigt. In den Naben 4 sind in bekannter Weise zusätzliche Bohrungen 7 zur Schmierölversorgung des Kolbenbolzens, der in Fig. 1 nicht dargestellt ist, eingebracht.

Zur Vorbereitung der Beschichtung werden beiderseits der Nabenbohrungen Abdeckschablonen 21 angebracht, die der Außenkontur der Naben 4 angepasst sind. Die Schablonen 21 verhindern eine Beschichtung der Außenseiten der Naben.

Der aus dem sehr temperaturbeständigen Grundharz Polyamidimid aufgebaute Gleitlack enthält als Festschmierstoff Graphit mit einer Partikelgröße von 1-3 µm. Die Viskosität des Gleitlacks ist derart eingestellt, dass keine Tropfenbildung, aber eine ausreichende Applizierung ermöglicht ist.

Die mittig in den Nabenbohrungen 3 eingebrachten Schmierölbohrungen 7 sollen durch den Geleitlack nicht zugesetzt werden. Aus diesem Grund, und damit das Schmieröl sich besser in dem Spalt zwischen Nabenbohrung und Kolbenbolzen verteilen kann, wird die Beschichtung 6 im Bereich der Schmierölbohrung in Form einer radial umlaufenden "Schmierrille" ausgespart, entsprechend Darstellung nach Fig. 3. Ebenso sind eine oder mehrere parallel zur Achse der Nabenbohrungen verlaufende Schmierrillen oder auch eine Kombination davon, durch Verwendung entsprechender Masken realisierbar. Zur Beschichtung wird die Vorrichtung 11 verwendet.

Die Düse 14 wird an einer Kolbenseite K1 angesetzt und ohne Gleitlackzufuhr bis zur Tiefe T1 der Nabenbohrung 3 eingefahren. Danach wird der Gleitlack im Bereich d aufgetragen. Im Bereich der Abdeckschablone 21 auf der Kolbenseite K2 wird die Lackzufuhr abgestellt, und der in der Düse 14 verbleibende Lackrest wird auf die Abdeckschablone 21 abgesprüht. Anschließend wird die Düse 14 ohne Lackzufuhr bis zur Tiefe T2 zurück bewegt und von dort aus der Bereich e mit Gleitlack besprüht. Der Gleitlackrest wird auf der Kolbenseite K1 im Bereich der Abdeckschablone 21 abgesprüht. Die Applizierung des Gleitlackes erfolgt auf das 50 bis 80°C vorgewärmten Kolben.

Danach wird die Schicht thermisch in einem Ofen ausgehärtet, wobei der Kolben zwischen10 bis 20 Minuten lang auf einer Temperatur von 200 °C gehalten werden muss. Die so erhaltene Schicht ist ca. 10 µm dick, wobei eine Schichtdickentoleranz von plus/minus 1 µm erreicht wird. Trotz Dickenreduzierung der Gleitschicht infolge Schrumpfung der Schicht wird ein enges diametrales Bolzenspiel erreicht, welches 10 - 20 µm beträgt. Dieses enge Spiel ist besonders vorteilhaft, um Geräusche durch Bolzentickern zu vermeiden. Die Beschichtung gewährleistet, dass trotz des engen Spiels keine Fresser auftreten.

### Ausführungsbeispiel 4

### Exzentrische Beschichtung der Gleitlagerflächen der Nabenbohrung:

Der Kolben wird im Wesentlichen gemäß Ausführungsbeispiel 1 bearbeitet und gereinigt.

Zur Vorbereitung der Beschichtung werden beiderseits der Nabenbohrungen 3 Abdeckschablonen 21 angebracht, die der Außenkontur der Naben 4 angepasst sind. Die Schablonen 21 verhindern eine Beschichtung der Außenseiten der Naben.

Der aus dem sehr temperaturbeständigen Grundharz Polyamidimid aufgebaute Gleitlack enthält als Festschmierstoff Graphit mit einer Partikelgröße von 1-3 µm. Die Viskosität des Gleitlacks ist derart eingestellt, dass keine Tropfenbildung, aber eine ausreichende Applizierung ermöglicht ist.

Mit einem Vorschub von 10-20 mm/sec. wird die Düse 14 exzentrisch in die Nabenbohrung 3 eingeführt. Die Exzentrizität beträgt ein Viertel des Düsendurchmessers D, wobei die Achse der Düse in Richtung Nabenbohrungszenit verschoben ist. Der Gleitlack wird auf den 50 bis 80 °C vorgewärmten Kolben appliziert. Der Gleitlack enthält im ausgehärteten Zustand 50-60 Gew.- % Festschmierstoffe. Ohne Lackzufuhr wird die Düse anschließend zurückgefahren. Der ganze Beschichtungsvorgang erfolgt in weniger als 5 Sekunden.

Danach wird die Schicht thermisch in einem Ofen ausgehärtet, wobei der Kolben zwischen10 bis 20 Minuten lang auf einer Temperatur von 200 °C gehalten werden muss. Die so erhaltene Beschichtung 6 weist in Richtung Nabenbohrungszenit eine Dicke von ca. 15 µm auf und in Richtung Nabenbohrungsnadir von 5 µm auf. Am Äquator der Nabenbohrung beträgt die Beschichtungsdicke ca. 10 µm. Damit wird im Bereich der höchsten mechanischen Beanspruchung eine dickere Schicht aufgetragen, während im Bereich der geringsten mechanischen Belastung eine dünne Schicht appliziert wird.

Zur Durchführung des Beschichtungsverfahrens eignet sich auch ein Schleuderapparat S-520 der Firma Sprimag, Kirchheim. Die angegeben Beschichtung ist ebenso auf bereits phosphatierte Gleitlageroberflächen der Nabenbohrungen 3 möglich, wobei die Schichtdicken von Phosphatschicht und Beschichtung 7 auf das jeweilige Einbauspiel des Kolbenbolzen- Naben-Lagers abzustimmen ist. Der Kolbenbolzen ist dabei nicht beschichtet.

Es liegt im Rahmen der Erfindung, dass die Beschichtung ebenso für Kolben mit Nabenbuchsen anwendbar ist. In angegebener Weise kann die Lauffläche der Buchse beschichtet werden.

### Bezugszeichen

- 1: Kolben
- 2: Kolbenschaftteil
- 3: Nabenbohrung
- 4: Naben
- 5: Gleitlagerfläche der Nabenbohrungen
- 6: Beschichtung, selbstschmierend (Gleitlack)
- 7: Schmierölbohrung/Schmierölrille
- 10: Vorrichtung zum Rotationszerstäuben
- 11: Grundkörper
- 12: Lager für Düsenkörper
- 13: Düsenkörper
- 14: Düse
- 15: Düsenaustritt
- 16: Prallplatte
- 17: Zuführkanal für Gleitlack
- 18: Zuführkanal für Druckluft
- 19: Mischkammer
- 20: Auswurfkanal
- 21: Schablone
- 22: Spalt
- 23: Antrieb
- 24: Sprühstrahl
- D: Düsendurchmesser
- T: Düsentiefe
- Da: Düsenachse

## Patentansprüche

1. Kolben (1) für einen Verbrennungsmotor, mit Gleitlagerflächen (4) aufweisende Nabenbohrungen (3) zur Aufnahme eines Kolbenbolzens, wobei
die Gleitlagerflächen (5) eine direkt mit dem Kolbenmaterial verbundene selbstschmierende Beschichtung (6) aus einem thermisch ausgehärteten Harz mit darin eingelagerten Festschmierstoffpartikel aufweist,
**dadurch gekennzeichnet,**
**dass** das Harz ein Polyamidimid ist, und dass die Festschmierstoffpartikel jeweils aus einem oder einer Mischung von zwei der Materialien Graphit, Molybdändisulfid, Wolframdisulfid, hexagonales Bornitrid oder PTFE bestehen.

2. Kolben nach Anspruch 1, **dadurch gekennzeichnet, dass** die Beschichtung (6) mindestens in einem Teilbereich der Gleitlagerflächen (5) angeordnet ist.

3. Kolben nach Anspruch 2, **dadurch gekennzeichnet, dass** die Beschichtung der Gleitlagerfläche 50 bis 60 Gewichts- % Festschmierstoffpartikel enthält, wobei die Festschmierstoffpartikel eine Partikelgröße von 1 bis 3 µm aufweisen.

4. Kolben nach einem der Ansprüche, **dadurch gekennzeichnet, dass** die Schichtdicke der Beschichtung 10-15 µm beträgt.

5. Kolben nach Anspruch 4, **dadurch gekennzeichnet, dass** die Schichtdicke eine Toleranz von +/- 1 µm beträgt.

6. Verfahren zur Beschichtung von Gleitlagerflächen (5) einer Nabenbohrung (3), insbesondere für einen Kolben (1) eines Verbrennungsmotors,
**dadurch gekennzeichnet,**
**dass** mittels Rotationszerstäubung eine selbstschmierende Beschichtung (6) aus einem thermisch ausgehärteten Harz aus Polyamidimid mit darin eingelagerten Festschmierstoffpartikel direkt auf die Gleitlagerflächen (5) aufgebracht wird.

7. Verfahren nach Anspruch 6, **dadurch gekennzeichnet, dass** die Festschmierstoffpartikel jeweils aus einem oder einer Mischung von zwei der Materialien Graphit, Molybdändisulfid, Wolframdisulfid, hexagonales Bornitrid oder PTFE gebildet sind, wobei die aus einzelnen Komponenten und dem Harz bestehende Mischung als Gleitlack auf die Gleitlagerflächen (5) der Nabenbohrung (3) aufgebracht wird.

8. Verfahren nach Anspruch 6, **dadurch gekennzeichnet, dass** der Gleitlack auf vollständig entfettete, gereinigte und span- und ablagerungsfreie Gleitlagerflächen des Kolbens mit einer Oberflächenrauhigkeit von Rₐ (Mittenrauwert)< 0,63 µm aufgebracht wird.

9. Verfahren nach einem der vorhergehenden Ansprüche, **dadurch gekennzeichnet, dass** das Rotationszerstäuben mittels einer zentrisch in die Nabenbohrung (3) eingeführten rotierenden Düse (14) bei einem Vorschub von 10-20 mm/sec. durchgeführt wird.

10. Verfahren nach Anspruch 8, **dadurch gekennzeichnet, dass** das Zerstäuben des Gleitlackes bei einer Rotationsgeschwindigkeit der Düse von 14.000 bis 18.000 Umdrehungen pro Minute durchgeführt wird.

11. Verfahren nach Anspruch 9, **dadurch gekennzeichnet, dass** der Gleitlack senkrecht zur Gleitlagerfläche (5) aufgestäubt wird.

12. Verfahren nach Anspruch 10, **dadurch gekennzeichnet, dass** der Kolben (1) vor und während des Rotationszerstäuben des Gleitlacks vorgewärmt ist und dass nach Beendigung des Rotationszerstäubens der Kolben unmittelbar einer Wärmebehandlung unterzogen wird.

13. Verfahren nach Anspruch 11, **dadurch gekennzeichnet, dass** die Vorwärmung des Kolbens bis zum Erreichen einer Kolbentemperatur von 50 bis 80 °C erfolgt, wobei die Wärmebehandlung zwischen 10 bis 20 min bei einer Temperatur von 200 °C durchgeführt wird.

14. Verfahren nach Anspruch 12, **dadurch gekennzeichnet, dass** eine Schichtdickentoleranz nach dem Aushärten des Gleitlacks von plus/minus 1 µm erreicht wird.

15. Verwendung einer Beschichtung (6), die aus einem thermisch ausgehärteten Harz aus Polyamidimid mit eingelagerten Festsschmierstoffpartikeln gebildet ist, in Nabenbohrungen (3) eines Kolbens (1) als Gleitlagerschicht in einem Verbrennungsmotor.

16. Verwendung einer Beschichtung, nach Anspruch 13, **dadurch gekennzeichnet, dass** die Festschmierstoffpartikel jeweils aus einem oder einer Mischung aus zwei der Materialien Graphit, Molybdändisulfid, Wolframdisulfid, hexagonales Bornitrid oder PTFE bestehen.

## Claims

1. Piston (1) for an internal combustion engine with hub bores (3) having plain bearing surfaces (4) for receiving a piston pin, the plain bearing surfaces (5) having a self-lubricating coating (6) directly connected to the piston material and comprising a thermally hardened resin with solid lubricant particles suspended therein,
**characterized**
**in that** the resin is a polyamide-imide and in that the lubricant particles each comprise one material or a mixture of two of the materials graphite, molybdenum disulfide, tungsten disulfide, hexagonal boron nitride or PTFE.

2. Piston according to Claim 1, **characterized in that** the coating (6) is arranged at least in one partial area of the plain bearing surfaces (5).

3. Piston according to Claim 2, **characterized in that** the coating of the plain bearing surface contains 50 to 60 % by weight of lubricant particles, the lubricant particles having a particle size of 1 to 3 µm.

4. Piston according to one of the claims, **characterized in that** the thickness of the coating is 10 - 15 µm.

5. Piston according to Claim 4, **characterized in that** the coating thickness has a tolerance of +/- 1 µm.

6. Method for coating of plain bearing surfaces (5) of a hub bore (3), in particular for a piston (1) of an internal combustion engine,
**characterized**
**in that** a self-lubricating coating (6) comprising a thermally hardened resin of polyamide-imide with solid lubricant particles suspended therein is applied directly to the plain bearing surfaces (5) by means of rotary atomization.

7. Method according to Claim 6, **characterized in that** the lubricant particles are each formed from one material or a mixture of two of the materials graphite, molybdenum disulfide, tungsten disulfide, hexagonal boron nitride or PTFE, the mixture comprising individual components and the resin being applied as an antifriction coating to the plain bearing surfaces (5) of the hub bore (3).

8. Method according to Claim 6, **characterized in that** the antifriction coating is applied to completely degreased and cleaned plain bearing surfaces of the piston that are free of chips and deposits and have a surface roughness of Rₐ (mean roughness value) of <0.63 µm.

9. Method according to one of the preceding claims, **characterized in that** rotary atomization is performed by means of a rotating nozzle (14) inserted centrally into the hub bore (3) with a feed rate of 10-20 mm/secs.

10. Method according to Claim 8, **characterized in that** the atomization of the antifriction coating is performed with a nozzle rotation speed of 14,000 to 18,000 revolutions per minute.

11. Method according to Claim 9, **characterized in that** the antifriction coating is dusted on vertically to the plain bearing surface (5).

12. Method according to Claim 10, **characterized in that** the piston (1) is preheated before and during the rotary atomization of the antifriction coating and **in that** after completion of rotary atomization the piston is immediately subjected to a heat treatment.

13. Method according to Claim 11, **characterized in that** the piston is preheated until a piston temperature of 50 to 80°C is achieved, the heat treatment being performed for between 10 and 20 minutes at a temperature of 200°C.

14. Method according to Claim 12, **characterized in that** a coating thickness tolerance of plus/minus 1 µm is achieved after hardening of the antifriction coating.

15. Use of a coating (6) formed from a thermally hardened resin of polyamide-imide with solid lubricant particles suspended therein in hub bores (3) of a piston (1) as a plain bearing coating in an internal combustion engine.

16. Use of a coating (6) according to Claim 13, **characterized in that** the solid lubricant particles each comprise one material or a mixture of two of the materials graphite, molybdenum disulfide, tungsten disulfide, hexagonal boron nitride or PTFE.

## Revendications

1. Piston (1) pour un moteur à combustion, avec des orifices de moyeu (3) présentant des surfaces de palier lisse (4) destinés à recevoir un axe de piston, sachant que les surfaces de palier lisse (5) présentent un revêtement autolubrifiant (6) en lien direct avec le matériau du piston et composé de résine thermodurcissable comprenant des particules de lubrifiant solide,
**caractérisé en ce**
**que** la résine est un polyamidimide, et que les particules de lubrifiant solide sont composées de respectivement un des matériaux graphite, bisulfure de molybdène, bisulfure de tungstène, nitrure de bore hexagonal ou PTFE, ou d'un mélange de deux de ces matériaux.

2. Piston selon la revendication 1, **caractérisé en ce que** le revêtement (6) est disposé au moins sur une partie des surfaces de palier lisse (5).

3. Piston selon la revendication 2, **caractérisé en ce que** le revêtement de la surface de palier lisse est composé à hauteur de 50 à 60 % de son poids de particules de lubrifiant solide, sachant que les particules de lubrifiant solide présentent une taille allant de 1 à 3 µm.

4. Piston selon l'une des revendications, **caractérisé en ce que** l'épaisseur de la couche du revêtement s'élève à 10-15 µm.

5. Piston selon la revendication 4, **caractérisé en ce que** l'épaisseur de la couche présente une tolérance de +/-1 µm.

6. Procédé pour recouvrir des surfaces de palier lisse (5) d'un orifice de moyeu (3), en particulier pour un piston (1) d'un moteur à combustion,
**caractérisé en ce**
**qu'**un revêtement autolubrifiant (6) composé d'une résine thermodurcissable en polyamidimide comprenant des particules de lubrifiant solide est appliqué directement sur les surfaces de palier lisse (5) par atomisation centrifuge.

7. Procédé selon la revendication 6, **caractérisé en ce que** les particules de lubrifiant solide sont composées de respectivement un des matériaux graphite, bisulfure de molybdène, bisulfure de tungstène, nitrure de bore hexagonal ou PTFE, ou d'un mélange de deux de ces matériaux, sachant que le mélange constitué des différents composants et de la résine est appliqué en tant que vernis de glissement sur les surfaces de palier lisse (5) de l'orifice de moyeu (3).

8. Procédé selon la revendication 6, **caractérisé en ce que** le vernis de glissement est appliqué sur des surfaces de palier lisse du piston entièrement nettoyées, exemptes de graisse, de copeaux et de dépôts et présentant une rugosité Rₐ (indice de rugosité moyenne)< 0,63 µm.

9. Procédé selon l'une des revendications précédentes, **caractérisé en ce que** l'atomisation centrifuge est réalisée au moyen d'une buse rotative (14) introduite de façon centrale dans l'orifice de moyeu (3) à une avance de 10-20 mm/sec.

10. Procédé selon la revendication 8, **caractérisé en ce que** le vernis de glissement est atomisé à une vitesse de rotation de la buse allant de 14 000 à 18 000 rotations par minute.

11. Procédé selon la revendication 9, **caractérisé en ce que** le vernis de glissement est pulvérisé verticalement par rapport à la surface de palier lisse (5).

12. Procédé selon la revendication 10, **caractérisé en ce que** le piston (1) est préchauffé avant et pendant l'atomisation centrifuge du vernis de glissement, et que le piston est soumis à un traitement thermique dès la fin de l'atomisation centrifuge.

13. Procédé selon la revendication 11, **caractérisé en ce que** le piston est préchauffé jusqu'à ce qu'il ait atteint une température de 50 à 80 °C, sachant que le traitement thermique est réalisé à une température de 200 °C pendant 10 à 20 minutes.

14. Procédé selon la revendication 12, **caractérisé en ce qu'**une tolérance d'épaisseur de couche de plus ou moins 1 µm est obtenue après durcissement du vernis de glissement.

15. Utilisation d'un revêtement (6), composé d'une résine thermodurcissable en polyamidimide comprenant des particules de lubrifiant solide, dans des orifices de moyeu (3) d'un piston (1) en tant que couche de palier lisse dans un moteur à combustion.

16. Utilisation d'un revêtement selon la revendication 13, **caractérisée en ce que** les particules de lubrifiant solide sont composées de respectivement un des matériaux graphite, bisulfure de molybdène, bisulfure de tungstène, nitrure de bore hexagonal ou PTFE, ou d'un mélange de deux de ces matériaux.
